# EUROPEAN PATENT APPLICATION

(11) **EP 1 341 107 A1**
(43) Date of publication of application: **03.09.2003**
(21) Application number: 01999908.5
(22) Date of filing: 06.12.2001
(51) Int. Cl.: G06F 17/60, H04M 11/00, H04M 1/247

(54) **MENU PRESENTING SERVER, MENU PRESENTING SYSTEM, MENU PRESENTING METHOD, MENU PRESENTING PROGRAM, AND RECORDING MEDIUM**

(30) Priority: 06.12.2000 JP 2000371602
(71) Applicant: NTT DoCoMo, Inc., Tokyo 100-6150 (JP)
(72) Inventor: SUZUKI, Shigemi, Nakahara-ku, Kawasaki-shi, Kanagawa 211- (JP); KASAI, Shuji, Hakuhodo, Inc., Minato-ku, Tokyo 108-8088 (JP)
(74) Representative: Bockhorni, Josef
(86) International application number: JP0110697
(87) International publication number: WO02046992

(57) **Abstract**

A menu presenting system 10 comprises a menu presenting server 12, and a PHS terminal 16 connected to the menu presenting server 12 by way of a PHS network 14. The menu presenting server 12 has a storage section 18 and a menu presenting section 20. The storage section 18 stores a plurality of flyer screens 22a to 22z introducing a plurality of items of contents distributed to the PHS terminal 16. According to instruction inputs fed from the PHS terminal 16, the menu presenting section 20 reads out a plurality of flyer screens 22a to 22z stored in the storage section 18 and sequentially presents them to the PHS terminal 16.

## Description

### Technical Field

The present invention relates to a menu presenting server, menu presenting system, menu presenting method, menu presenting program, and recording medium for presenting to a mobile information terminal a menu of contents distributed to the mobile information terminal.

### Background Art

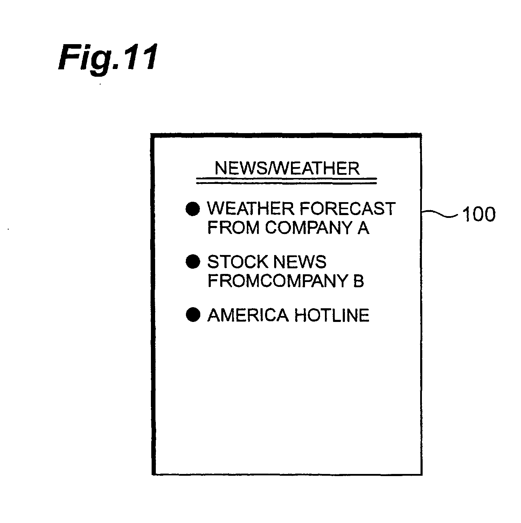

As mobile information terminals such as mobile phones and PHS (Personal Handyphone System) terminals have been becoming widespread, and communication technologies have been advancing so as to speed up data transmission and so forth, services for distributing various contents such as text data, music, and still images to mobile information terminals have been brought into practice. By selecting desirable contents from a menu of contents distributed from a menu presenting server, the user of a mobile information terminal can receive and browse (or view/hear) the contents. Here, since the display of a mobile information terminal is much smaller than that of a desktop PC or the like, the menu of contents presented by the menu presenting server is usually presented as a menu screen 100 listing titles of a plurality of items of contents as shown in Fig. 11. Namely, by selecting a specific title from the listed plurality of titles, the user of a mobile information terminal can receive and browse (or view/hear) the contents.

### Disclosure of the Invention

However, the menu presenting server in accordance with the above-mentioned prior art has a problem as follows. Namely, the menu presenting server in accordance with the above-mentioned prior art presents the menu of contents as a menu screen listing titles of a plurality of items of contents. Therefore, when selecting contents, the user of a mobile information terminal must determine details of contents from the titles of contents displayed on the menu screen, which are quite limited sources of information, and select contents. As a result, thus selected contents often differ from those desirable for the user, which causes the user to repeat operations of returning to the menu screen again so as to select other contents for many times.

Therefore, it is an object of the present invention to overcome the problem mentioned above and provide a menu presenting server, a menu presenting system, a menu presenting method, a menu presenting program, and a recording medium which make it possible for a user of a mobile information terminal to easily select desirable contents.

For achieving the above-mentioned object, the menu presenting server, menu presenting system, menu presenting method, menu presenting program, and recording medium of the present invention are a menu presenting server, menu presenting system, menu presenting method, menu presenting program, and recording medium for presenting to a mobile information terminal a menu of contents distributed to the mobile information terminal, wherein, according to an instruction input fed from the mobile information terminal, a plurality of introduction screens introducing a plurality of items of contents distributed to the mobile information terminal, respectively, are sequentially presented to the mobile information terminal.

Since introduction screens for introducing contents are used, various kinds of information other than titles can be incorporated in the menu of contents. Also, since such introduction screens are sequentially presented according to instruction inputs fed from the mobile information terminal, respective introduction screens for a plurality of items of contents can easily be referred to. This makes it possible to present a menu from which the user of the mobile information terminal can easily select desirable contents.

### Brief Description of the Drawings

Fig. 1 is a schematic view of a menu presenting system;
Fig. 2 is a schematic view of a flyer screen;
Fig. 3 is a schematic view of a flyer screen;
Fig. 4 is a schematic view of a flyer screen;
Fig. 5 is a chart showing a procedure of presenting a menu;
Fig. 6 is a schematic view of a portal screen;
Fig. 7 is a schematic view of a category selection screen;
Fig. 8 is a view showing how a menu is presented;
Fig. 9 is a chart showing a procedure of presenting a menu;
Fig. 10 is a view showing how a menu is presented;
Fig. 11 is a schematic view of a menu screen;
Fig. 12 is a schematic view of a menu presenting server;
Fig. 13 is a schematic view of a recording medium; and
Fig. 14 is a system diagram of a computer for executing a menu presenting program.

### Best Modes for Carrying Out the Invention

The menu presenting system in accordance with an embodiment of the present invention will now be explained with reference to the drawings. The menu presenting system in accordance with this embodiment includes the menu presenting server in accordance with an embodiment of the present invention.

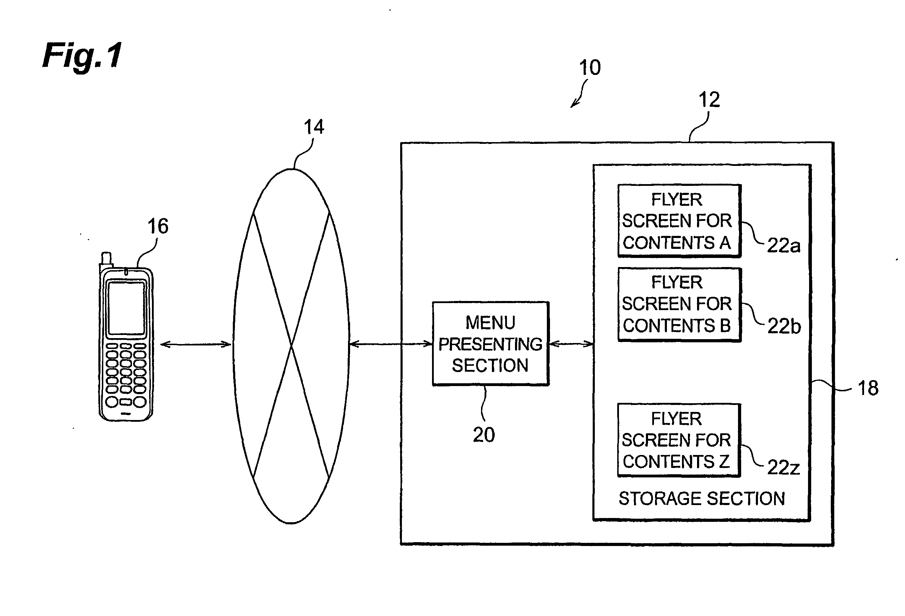

First, the configuration of the menu presenting system in accordance with the embodiment will be explained. Fig. 1 is a schematic view of the menu presenting system in accordance with the embodiment. The menu presenting system 10 in accordance with the embodiment comprises a menu presenting server 12, and a PHS terminal 16 (mobile information terminal) connected to the menu presenting server 12 by way of a PHS network 14.

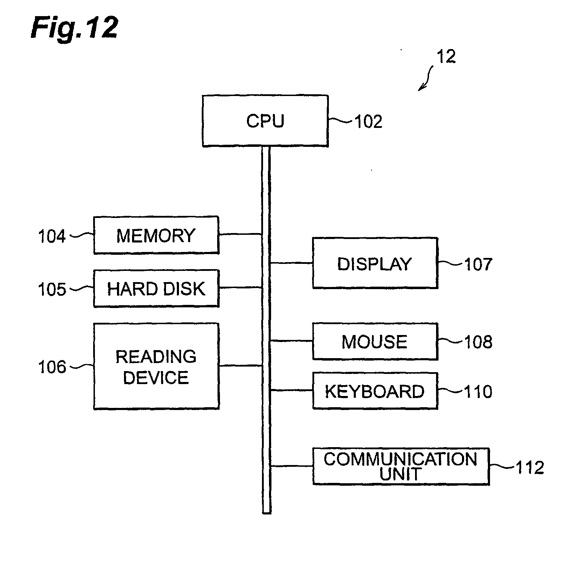

Physically, as shown in Fig. 12, the menu presenting server 12 is constructed as a server apparatus comprising a CPU 102 (central processing unit), a memory 104, a storage device such as a hard disk 105, a reading device 106, a display device such as a display 107, input devices such as a mouse 108 and a keyboard 110, and a transmitter/receiver such as a communication unit 112.

Functionally, as shown in Fig. 1, the menu presenting server 12 is a server apparatus for presenting to the PHS terminal 16 a menu of contents distributed to the PHS terminal 16, and comprises a storage section 18 and a menu presenting section 20. Here, the function of the menu presenting section 20 is realized, for example, when a program stored in the hard disk 105 shown in Fig. 12 is executed by the CPU 102.

The storage section 18 stores a plurality of flyer screens 22a to 22z (introduction screens) introducing a plurality of items of contents distributed to the PHS terminal 16, respectively. Here, more properly speaking, the storage section 18 does not store the flyer screens 22a to 22z themselves but data for displaying the flyer screens 22a to 22z onto the PHS terminal 16. However, for simplification, it will hereinafter be expressed that the flyer screens 22a to 22z are stored.

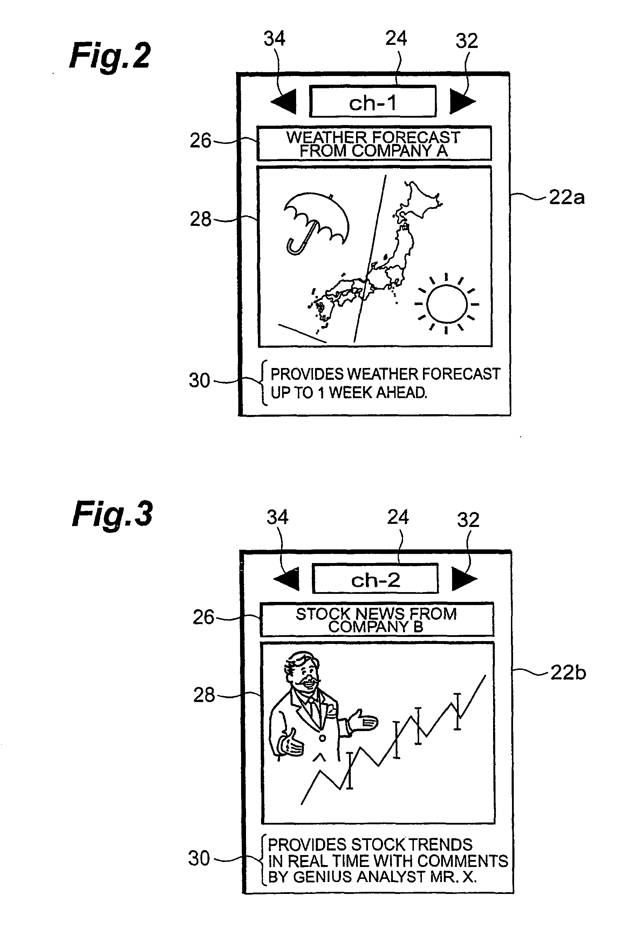

Figs. 2 to 4 are schematic views of the flyer screens 22a, 22b, and22c, respectively. A plurality of flyer screens 22a to 22z have similar configurations (with different details). Here, configurations of the flyer screens 22a to 22z will be explained with reference to Figs. 2 to 4 by way of example.

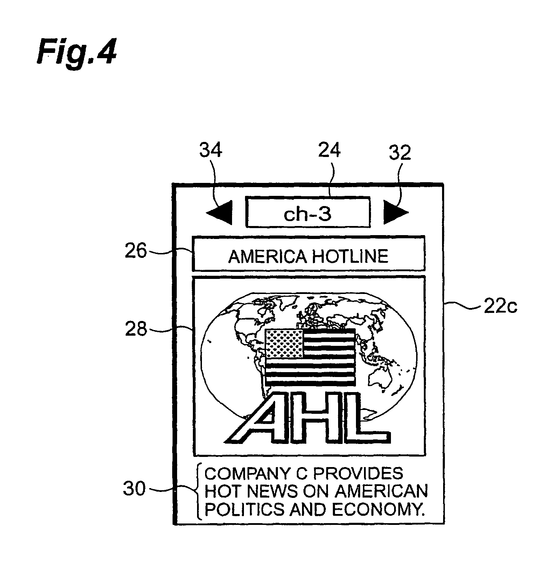

Each of the flyer screens 22a to 22z is a screen for introducing contents distributed to the PHS terminal 16. Namely, for example, the flyer screen 22a shown in Fig. 2 is a screen for introducing the contents titled "Weather Forecast from Company A" distributed to the PHS terminal 16, the flyer screen 22b shown in Fig. 3 is a screen for introducing the contents titled "Stock News from Company B" distributed to the PHS terminal 16, and the flyer screen 22c shown in Fig. 4 is a screen for introducing the contents titled "America Hot Line" distributed to the PHS terminal 16.

Each of the flyer screens 22a to 22z includes a channel number 24 which is the ID number of contents, a title 26 of contents, an introduction image (an image concerning contents) 28, and an introduction text 30 for contents. Here, the introduction image 28 for contents is a still image for introducing contents which are videos (moving images).

An order is set for the flyer screens 22a to 22z beforehand for each category to which the contents belong. This order is one in which the flyer screens 22a to 22z are presented to the PHS terminal 16. Each of the flyer screens 22a to 22z includes a next screen presentation instruction button 32 for causing the PHS terminal 16 to display the next flyer screen and a previous screen presentation instruction button 34 for causing the PHS terminal 16 to display the previous flyer screen.

Returning to Fig. 1, the menu presenting section 20 sequentially presents the flyer screens 22a to 22z to the PHS terminal 16 according to instruction inputs fed from the PHS terminal 16. More specifically, when a specific category is selected by the PHS terminal 16, the menu presenting section 20 reads out the first flyer screen of the flyer screens belonging to the selected category from the storage section 18, and presents it to the PHS terminal 16. When the next screen presentation instruction button 32 is selected (a next screen presentation instruction is inputted) in the state where the flyer screen for specific contents belonging to the selected category is displayed on the PHS terminal 16, the menu presenting section 20 reads out the next flyer screen in the flyer screens of contents belonging to this category from the storage section 18, and presents it to the PHS terminal 16. Similarly, when the previous screen presentation instruction button 34 is selected (a previous screen presentation instruction is inputted) in the state where the flyer screen for specific contents belonging to the selected category is displayed the PHS terminal 16, the menu presenting section 20 reads out the previous flyer screen in the flyer screens of contents belonging to this category from the storage section 18, and presents it to the PHS terminal 16.

When the next screen presentation instruction button 32 is selected in the state where the last flyer screen is displayed on the PHS terminal 16, the menu presenting section 20 reads out the first flyer screen from the storage section 18 and presents it to the PHS terminal 16. When the previous screen presentation instruction button 34 is selected in the state where the first flyer screen is displayed on the PHS terminal 16, the menu presenting section 20 reads out the last flyer screen from the storage section 18 and presents it to the PHS terminal 16.

Here, "next," "previous," "first," and "last" are based on the order determined beforehand concerning a plurality of flyer screens 22a to 22z which have already been explained.

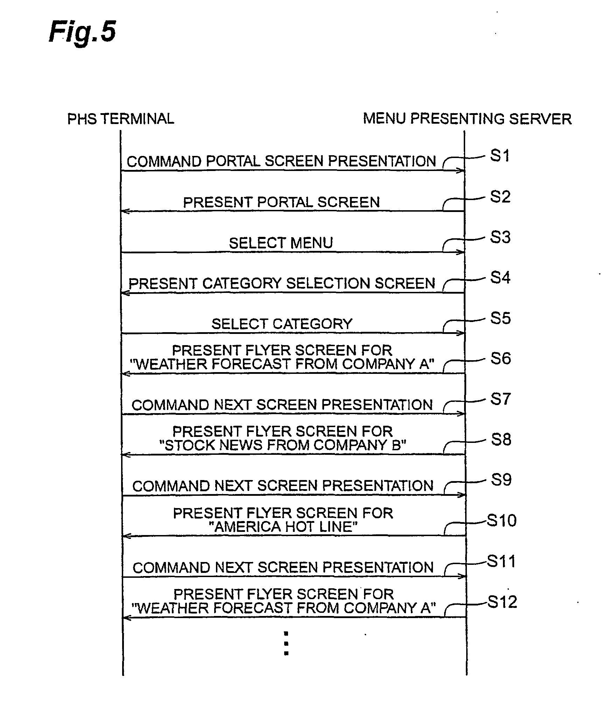

Operations of the menu presenting system in accordance with this embodiment will now be explained with reference to a specific example, and the menu presenting method in accordance with this embodiment will be explained. Fig. 5 is a chart showing a procedure of presenting a menu by the menu presenting system 1 in accordance with this embodiment.

First, when presenting a menu by the menu presenting system 10 in accordance with this embodiment, the user of the PHS terminal 16 operates an operation button of the PHS terminal 16, where by aportal screen presentation instruction is sent from the PHS terminal 16 to the menu presenting server 12 (S1).

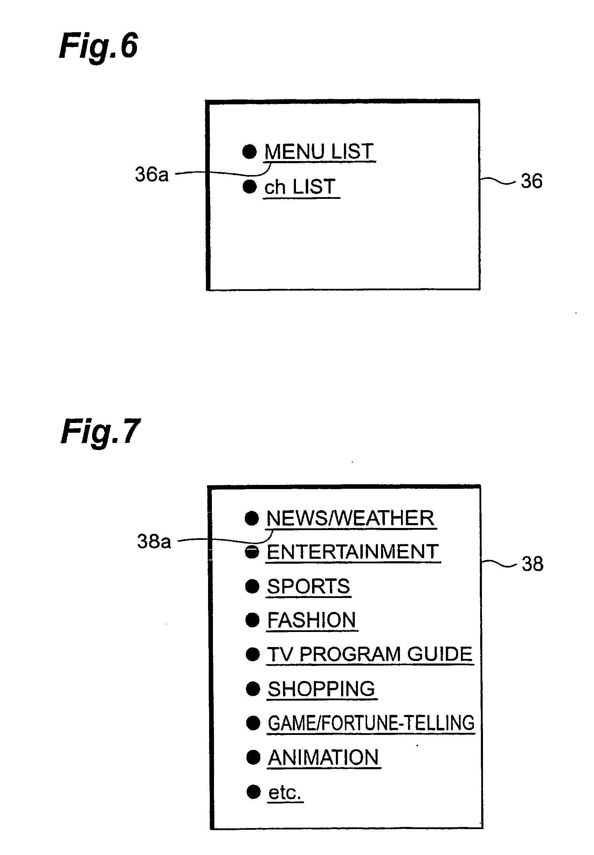

When the menu presenting server 12 receives the portal screen presentation instruction, the menu presenting server 12 presents to the PHS terminal 16 a portal screen 36 such as the one shown in Fig. 6 (S2). More specifically, the menu presenting server 12 sends the portal screen 36 to the PHS terminal 16, whereby the portal screen 36 is shown on the display of the PHS terminal 16. As shown in Fig. 6, the portal screen 36 includes a selection button (character string) 36a for selecting functions such as displaying of a menu for each category ("menu list") and displaying of a title list ("ch list") for contents.

When the selection button 36a for "menu list" is selected on the portal screen 36 as the user manipulates the operation button of the PHS terminal 16 (S3), the menu presenting server 12 presents to the PHS terminal 16 a category selection screen 38 such as the one shown in Fig. 7 (S4). More specifically, the category selection screen 38 is sent from the menu presenting server 12 to the PHS terminal 16, whereby the category selection screen 38 is shown on the display of the PHS terminal 16. As shown in Fig. 7, the category selection screen 38 includes a selection button (character string) 38a for selecting a specific category. In the example shown in Fig. 7, a specific category can be selected from nine categories of "news/weather," "entertainment," "sports," "fashion," "TV program guide," "shopping," "game/fortune-telling," "animation," and "etc."

When a specific category is selected on the category selection screen 38, thus selected category is sent from the PHS terminal 16 to the menu presenting server 12 (S5). The following will specifically be explained assuming that the selection button 38a for "news/weather" is selected. Here, it is assumed that the category of "news/weather" includes three items of contents, i.e., "Weather Forecast from Company A," "Stock News from Company B," and "America Hotline," and that an order is defined such that the flyer screen 22a for "Weather From Company A," the flyer screen 22b for "Stock News from Company B," and the flyer screen 22c for "America Hotline" are the first, second, and third, respectively.

When the category of "news/weather" is selected on the category selection screen 38, the menu server 12 initially presents to the PHS terminal 16 the initial (first) flyer screen among the flyer screens 22a to 22c for contents belonging to the category of "news/weather," i.e., the flyer screen 22a for "Weather Forecast from Company A" (S6). More specifically, the menu presenting section 20 of the menu presenting server 12 reads out the flyer screen 22a stored in the storage section 18. Thus read-out flyer screen 22a is sent from the menu presenting section 20 of the menu presenting server 12 to the PHS terminal 16, and is shown on the display of the PHS terminal 16.

Here, the flyer screen 22a for "Weather Forecast from Company A" is configured as shown in Fig. 2. When the channel number 24, title 26, or introduction image 28 of the flyer screen 22a for "Weather Forecast from Company A" is selected as the user manipulates the operation button of the PHS terminal 16 in the state where the flyer screen 22a is shown on the display of the PHS terminal 16, the menu presenting server 12 (or another server) starts distributing "Weather Forecast from Company A" to the PHS terminal 16.

When the next screen presentation instruction button 32 of the flyer screen 22a for "Weather Forecast from Company A" is selected as the user manipulates the operation button of the PHS terminal 16 in the state where this flyer screen 22a is shown on the display of the PHS terminal 16, a next screen presentation instruction is sent from the PHS terminal 16 to the menu presenting server 12 (S7).

When the next screen presentation instruction is received by the menu presenting server 12, the flyer screen 22b for "Stock News from Company B" which is the flyer screen next to the flyer screen 22a for "Weather Forecast from Company A" among the flyer screens 22a to 22c for contents belonging to the category of "news/weather" is presented to the PHS terminal 16 (88). More specifically, the menu presenting section 20 of the menu presenting server 12 initially reads out the flyer screen 22b stored in the storage section 18. Thus read-out flyer screen 22b is sent from the menu presenting section 20 of the menu presenting server 12 to the PHS terminal 16, so as to be shown on the display of the PHS terminal 16.

Here, the flyer screen 22b for "Stock News from Company B" is configured as shown in Fig. 3. When the channel number 24, title 26, or introduction image 28 of the flyer screen 22b for "Stock News from Company B" is selected as the user manipulates the operation button of the PHS terminal 16 in the state where the flyer screen 22b is shown on the display of the PHS terminal 16, the menu presenting server 12 (or another server) starts distributing "Stock News from Company B" to the PHS terminal 16.

When the next screen presentation instruction button 32 of the flyer screen 22b for "Stock News from Company B" is selected as the user manipulates the operation button of the PHS terminal 16 in the state where this flyer screen 22b is shown on the display of the PHS terminal 16, a next screen presentation instruction is sent from the PHS terminal 16 to the menu presenting server 12 (S9).

When the next screen presentation instruction is received by the menu presenting server 12, the flyer screen 22c for "America Hot Line" which is the flyer screen next to the flyer screen 22b for "Stock News from Company B" among the flyer screens 22a to 22c for contents belonging to the category of "news/weather" is presented to the PHS terminal 16 (S10). More specifically, the menu presenting section 20 of the menu presenting server 12 initially reads out the flyer screen 22c stored in the storage section 18. Thus read-out flyer screen 22c is sent from the menu presenting section 20 of the menu presenting server 12 to the PHS terminal 16, so as to be shown on the display of the PHS terminal 16.

Here, the flyer screen 22c for "America Hot Line" is configured as shown in Fig. 4. When the channel number 24, title 26, or introduction image 28 of the flyer screen 22c for "America Hot Line" is selected as the user manipulates the operation button of the PHS terminal 16 in the state where the flyer screen 22c is shown on the display of the PHS terminal 16, the menu presenting server 12 (or another server) starts distributing "America Hot Line" to the PHS terminal 16.

When the next screen presentation instruction button 32 of the flyer screen 22c for "America Hot Line" is selected as the user manipulates the operation button of the PHS terminal 16 in the state where this flyer screen 22c is shown on the display of the PHS terminal 16, a next screen presentation instruction is sent from the PHS terminal 16 to the menu presenting server 12 (S11).

When the next screen presentation instruction is received by the menu presenting server 12, the flyer screen 22a for "Weather Forecast from Company A" which is the first flyer screen for contents belonging to the category of "news/weather" is presented to the PHS terminal 16 (S12) again, since the flyer screen 22c for "America Hot Line" is the last flyer screen among the flyer screens 22a to 22c for contents belonging to the category of "news/weather."

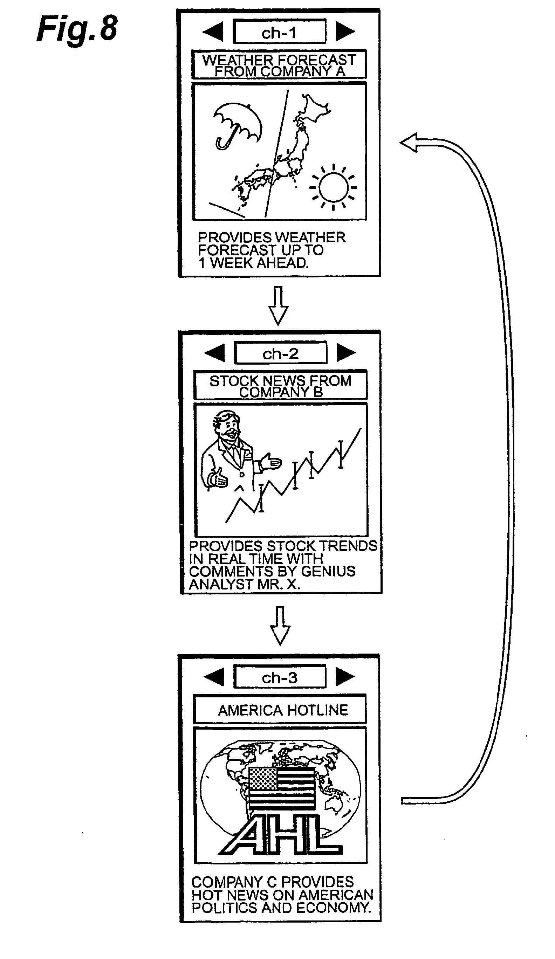

Subsequently, as shown in Fig. 8, the flyer screen 22b for "Stock News from Company B," the flyer screen 22c for "America Hot Line," and the flyer screen 22a for "Weather Forecast from Company A" are sequentially presented to the PHS terminal 16 when the respective next screen presentation instruction buttons 32 on the flyer screens 22a to 22c are selected.

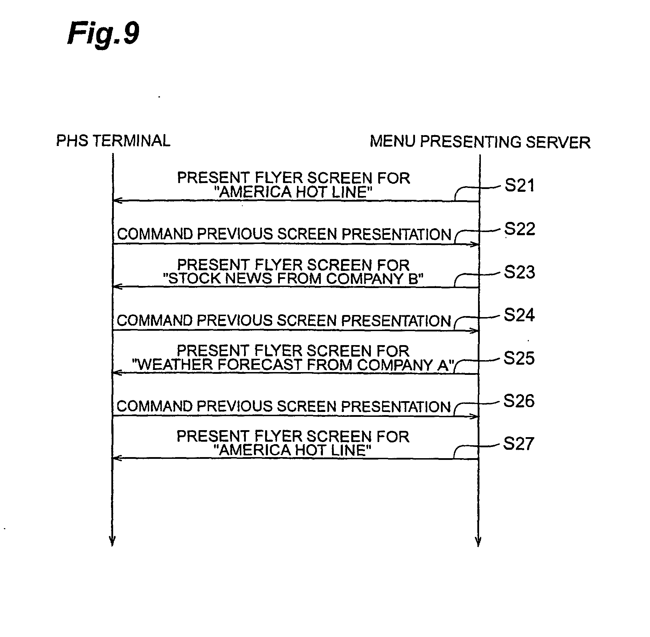

To the contrary, as shown in Fig. 9, when the previous screen presentation instruction button 34 of the flyer screen 22c for "America Hot Line" is selected as the user manipulates the operation button of the PHS terminal 16 in the state where the flyer screen 22c is shown on the display of the PHS terminal 16 (S21), a previous screen presentation instruction is sent from the PHS terminal 16 to the menu presenting server 12 (S22).

When the previous screen presentation instruction is received by the menu presenting server 12, the flyer screen 22b for "Stock News from Company B" which is the flyer screen previous to the flyer screen 22c for "America Hot Line" among the flyer screens 22a to 22c for contents belonging to the category of "news/weather" is presented to the PHS terminal 16 (S23).

When the previous screen presentation instruction button 34 of the flyer screen 22b for "Stock News from Company B" is selected as the user manipulates the operation button of the PHS terminal 16 in the state where the flyer screen 22b is shown on the display of the PHS terminal 16, a previous screen presentation instruction is sent from the PHS terminal 16 to the menu presenting server 12 (S24).

When the previous screen presentation instruction is received by the menu presenting server 12, the flyer screen 22a for "Weather Forecast from Company A" which is the flyer screen previous to the flyer screen 22b for "Stock News from Company A" among the flyer screens 22a to 22c for contents belonging to the category of "news/weather" is presented to the PHS terminal 16 (S25).

When the previous screen presentation instruction button 34 of the flyer screen 22a for "Weather Forecast from Company A" is selected as the user manipulates the operation button of the PHS terminal 16 in the state where the flyer screen 22a is shown on the display of the PHS terminal 16, a previous screen presentation instruction is sent from the PHS terminal 16 to the menu presenting server 12 (S26).

When the previous screen presentation instruction is received by the menu presenting server 12, the flyer screen 22c for "America Hot Line" which is the last flyer screen for contents belonging to the category of "news/weather" is presented to the PHS terminal 16 (S27) again, since the flyer screen 22a for "Weather Forecast from Company A" is the first flyer screen among the flyer screens 22a to 22c for contents belonging to the category of "news/weather."

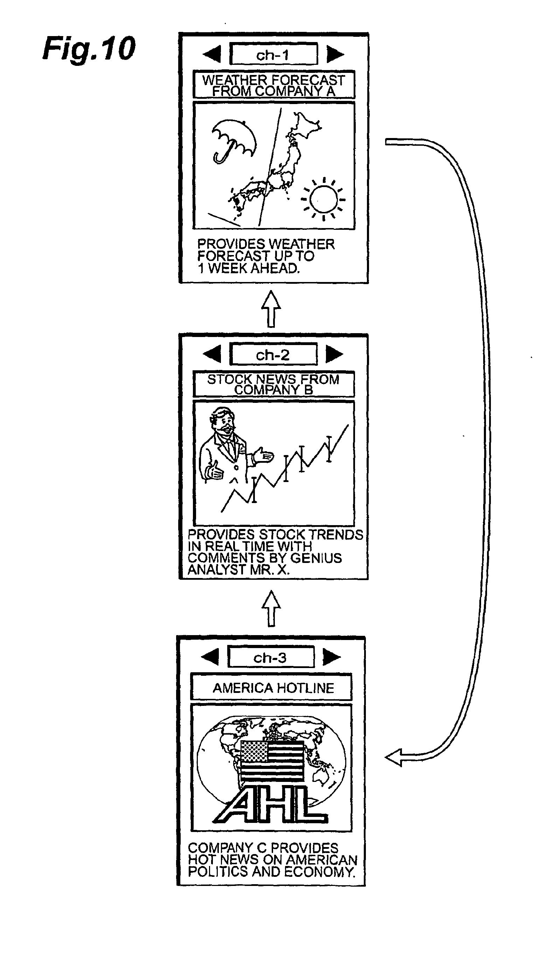

Subsequently, as shown in Fig. 10, the flyer screen 22b for "Stock News from Company B," the flyer screen 22a for "Weather Forecast from Company A," and the flyer screen 22c for "America Hot Line" are sequentially presented to the PHS terminal 16 when the respective previous screen presentation instruction buttons 34 on the flyer screens 22a to 22c are selected.

Operations and effects of the menu presenting system in accordance with this embodiment will now be explained. In the menu presenting system 10 in accordance with this embodiment, a menu of contents is constructed by use of a plurality of items of contents and a plurality of flyer screens introducing them, respectively, whereby various kinds of information (e.g., introduction images and introduction texts) other than titles can be incorporated in the menu of contents. Also, such flyer screens are sequentially presented to the display of the PHS terminal 16 according to instruction inputs such as next screen presentation instructions and previous screen presentation instructions fed from the PHS terminal 16, whereby the respective flyer screens for a plurality of items of contents can easily be referred to. This makes it possible to present a menu from which the user of the PHS terminal 16 can easily select desirable contents.

When an introduction image for contents is included in the flyer screen, the menu presenting system 10 in accordance with this embodiment can present a visual image concerning the contents to the user of the PHS terminal 16. This makes it possible to present a menu from which the user of the PHS terminal 16 can easily select desirable contents.

When the introduction image of contents included in the flyer screen is a still image, the amount of data transmitted/received between the menu presenting server 12 and PHS terminal 16 can be made smaller in the menu presenting system 10 in accordance with this embodiment as compared with the case where the introduction image is a moving image. As a result, the time required for the flyer screen to be presented on the PHS terminal 16, and the time required for the flyer screen presented on the PHS terminal 16 to change over become shorter, whereby the user of the PHS terminal 16 can be kept from feeling stress.

When the first flyer screen is presented in the case where the next screen presentation instruction button 32 is selected in the state where the last flyer screen is presented, the last flyer screen and the first flyer screen can be linked to each other concerning operations of selecting the next screen presentation instruction buttons 32 in the menu presenting system 10 in accordance with this embodiment. Therefore, operations of repeatedly selecting the previous screen presentation instruction button 34 become unnecessary when the first flyer screen is desired to be called from the last flyer screen. As a result, operability improves at the time of referring to the menu of contents.

When the last flyer screen is presented in the case where the previous screen presentation instruction button 34 is selected in the state where the first flyer screen is presented, the first flyer screen and the last flyer screen can be linked to each other concerning operations of selecting the previous screen presentation instruction buttons 34 in the menu presenting system 10 in accordance with this embodiment. Therefore, operations of repeatedly selecting the next screen presentation instruction button 32 become unnecessary when the last flyer screen is desired to be called from the first flyer screen. As a result, operability improves at the time of referring to the menu of contents.

Though the introduction images 28 of contents included in flyer screens are still images in the menu presenting system 10 in accordance with the above-mentioned embodiment, they may be moving images as well. When the introduction images 28 are moving images, more explicit visual images of contents can be presented to the user of the PHS terminal 16, though the amount of data transmitted/received between the menu presenting server 12 and the PHS terminal 16 becomes somewhat greater. This makes it possible to present a menu from which the user of the PHS terminal 16 can select desirable contents more easily.

Though the PHS terminal 16 is used as a mobile information terminal for presenting the menu of contents from the menu presenting server 12 in the menu presenting system 10 in accordance with the above-mentioned embodiment, it is not restricted to the PHS terminal 16. Namely, such a mobile information terminal may also be a mobile phone, a PDA terminal, a notebook PC, and the like.

Though the menu presenting server 12 and the PHS terminal 16, which is a mobile information terminal, are connected to each other by the PHS network 14, a public telephone network, the Internet, and the like may also be used according to kinds of mobile information terminals.

Finally, a menu presenting program in accordance with an embodiment of the present invention, and a computer-readable recording medium (hereinafter simply referred to as recording medium) in which the menu presenting program is recorded will be explained. Here, the recording medium refers to one which can cause a reading device provided in a hardware resource of a computer to effect a state of change in energy such as magnetism, light, or electricity according to details of description in a program, so that the details of description in the program can be transmitted to the reading device in the form of a signal corresponding to the state of change. Examples of such a recording medium include magnetic disks, optical disks, CD-ROM, memories incorporated in computers, and the like.

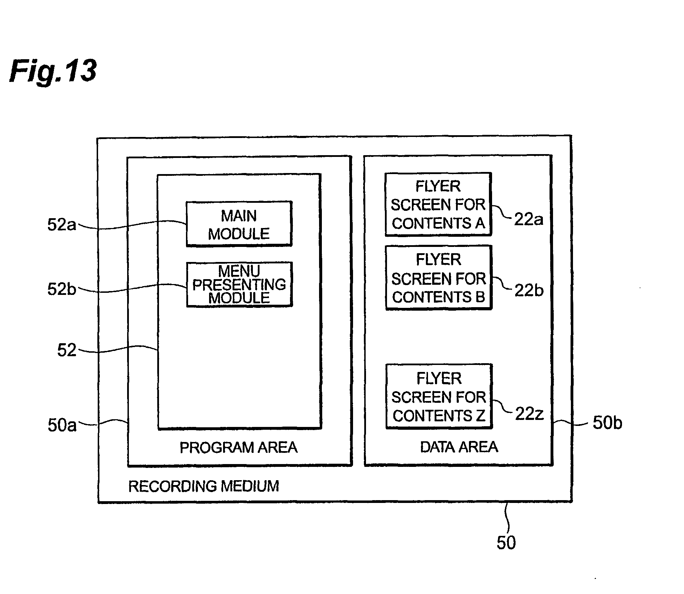

Fig. 13 is a schematic view of the recording medium in accordance with an embodiment of the present invention. As shown in Fig. 13, the recording medium 50 comprises a program area 50a for recording a program and a data area 50b for recording data. A menu presenting program 52 is recorded in the program area 50a. The menu presenting program 52 is one for presenting to the PHS terminal 16 (mobile information terminal) a menu of contents distributed to the PHS terminal, and comprises, as shown in Fig. 13, a main module 52a for controlling processing operations and a menu presenting module 52b for sequentially presenting a plurality of flyer screens (introduction screens) introducing a plurality of items of contents distributed to the PHS terminal, respectively, according to instruction inputs fed from the FHS terminal. The above-mentioned flyer screens 22a to 22z are stored in the data area 50b. Here, the function realized by operating the menu presenting module 52a is similar to the function of the menu presenting section 20 of the menu presenting server 12.

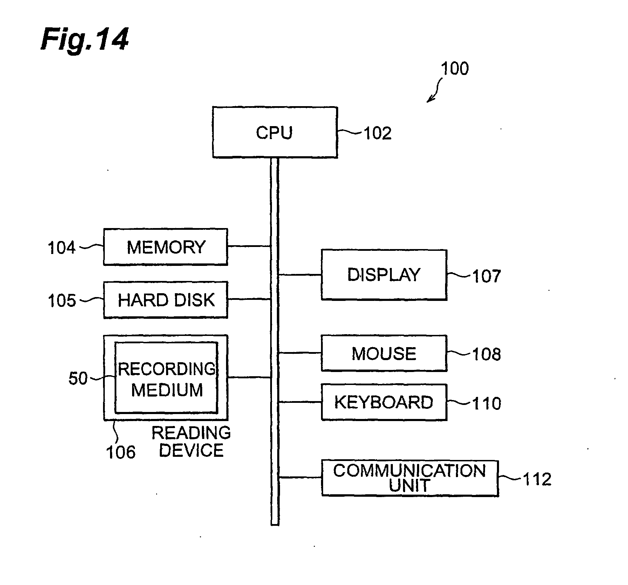

Fig. 14 is a system diagram of a computer (e.g., server system) for executing the menu presenting program 52 recorded in the recording medium 50. As shown in Fig. 14, a computer 100 comprises a CPU 102 (central processing unit) for controlling the execution of the menu presenting program 52 and the like, a memory (RAM) 104 in which an operating system (OS) is resident, a storage device such as a hard disk 105, a reading device 106, a display device such as a display 107, input devices such as a mouse 108 and a keyboard 110, and a transmitter/receiver such as a communication unit 112. When the recording medium 50 is inserted into the reading device 106, the latter can get access to the information recorded in the recording medium 50, whereby the menu presenting program 52 recorded in the program area 50a of the recording medium 50 can be executed by the computer 100.

As the reading device 106, a flexible disk drive device, a CD-ROM drive device, a magnetic tape drive device, or the like is used in conformity to the recording medium 50.

The menu presenting program in accordance with this embodiment is not only supplied in the state stored in a recording medium, but also distributed online by use of a wired or wireless line. In this case, the menu presenting program is transmitted by a carrier wave.

### Industrial Applicability

The present invention can be utilized as a menu presenting server, menu presenting system, and menu presenting method for presenting to a mobile information terminal a menu of contents distributed to the mobile information terminal when distributing contents to the mobile information terminal.

## Claims

1. A menu presenting server for presenting to a mobile information terminal a menu of contents distributed to said mobile information terminal,
wherein, according to an instruction input fed from saidmobile information terminal, a plurality of introduction screens introducing a plurality of items of contents distributed to said mobile information terminal, respectively, are sequentially presented to said mobile information terminal.

2. A menu presenting server according to claim 1, wherein said introduction screen includes an image concerning said contents.

3. A menu presenting server according to claim 2, wherein said image is a still image.

4. A menu presenting server according to claim 2, wherein said image is a moving image.

5. A menu presenting server according to claim 1, wherein an order is defined beforehand for said plurality of introduction screens;
wherein a next introduction screen is presented to said mobile information terminal according to said order when a next screen presentation instruction is fed from saidmobile information terminal; and
wherein a first introduction screen is presented to said mobile information terminal when said next screen presentation instruction is fed from said mobile information terminal in a state where a last introduction screen is presented to said mobile information terminal.

6. A menu presenting server according to claim 1, wherein an order is defined beforehand for said plurality of introduction screens;
wherein a previous introduction screen is presented to said mobile information terminal according to said order when a previous screen presentation instruction is fed from said mobile information terminal; and
wherein a last introduction screen is presented to said mobile information terminal when said previous screen presentation instruction is fed from said mobile information terminal in a state where a first introduction screen is presented to said mobile information terminal.

7. A menu presenting system comprising:
a mobile information terminal; and
a menu presenting server for presenting to said mobile information terminal a menu of contents distributed to said mobile information terminal;
wherein said menu presenting server is the menu presenting server according to one of claims 1 to 6.

8. A menu presenting method for presenting to a mobile information terminal a menu of contents distributed to said mobile information terminal;
wherein, according to an instruction input fed from said mobile information terminal, a plurality of introduction screens introducing a plurality of items of contents distributed to said mobile information terminal, respectively, are sequentially presented to said mobile information terminal.

9. A menu presenting method according to claim 8, wherein said introduction screen includes an image concerning said contents.

10. A menu presenting method according to claim 9, wherein said image is a still image.

11. A menu presenting method according to claim 9, wherein said image is a moving image.

12. A menu presenting method according to claim 8, wherein an order is defined beforehand for said plurality of introduction screens;
wherein a next introduction screen is presented to said mobile information terminal according to said order when a next screen presentation instruction is fed from saidmobile information terminal; and
wherein a first introduction screen is presented to said mobile information terminal when said next screen presentation instruction is fed from said mobile information terminal in a state where a last introduction screen is presented to said mobile information terminal.

13. A menu presenting method according to claim 8, wherein an order is defined beforehand for said plurality of introduction screens;
wherein a previous introduction screen is presented to said mobile information terminal according to said order when a previous screen presentation instruction is fed from said mobile information terminal; and
wherein a last introduction screen is presented to said mobile information terminal when said previous screen presentation instruction is fed from said mobile information terminal in a state where a first introduction screen is presented to said mobile information terminal.

14. A menu presenting program for presenting to a mobile information terminal a menu of contents distributed to said mobile information terminal;
wherein a computer is caused to execute processing for sequentially presenting, according to an instruction input fed from said mobile information terminal, a plurality of introduction screens introducing a plurality of items of contents distributed to said mobile information terminal, respectively.

15. A menu presenting program according to claim 14, wherein said introduction screen includes an image concerning said contents.

16. A menu presenting program according to claim 15, wherein said image is a still image.

17. A menu presenting program according to claim 15, wherein said image is a moving image.

18. A menu presenting program according to claim 14, wherein an order is defined beforehand for said plurality of introduction screens; and
wherein said computer is caused to execute processing for presenting a next introduction screen to said mobile information terminal according to said order when a next screen presentation instruction is fed from said mobile information terminal, and
presenting a first introduction screen to said mobile information terminal when said next screen presentation instruction is fed from said mobile information terminal in a state where a last introduction screen is presented to said mobile information terminal.

19. A menu presenting program according to claim 14, wherein an order is defined beforehand for each of said plurality of introduction screens; and
wherein said computer is caused to execute processing for presenting a previous introduction screen to said mobile information terminal according to said order when a previous screen presentation instruction is fed from said mobile information terminal, and
presenting a last introduction screen to said mobile information terminal when said previous screen presentation instruction is fed from said mobile information terminal in a state where a first introduction screen is presented to said mobile information terminal.

20. A computer-readable recording medium in which the menu presenting program according to one of claims 14 to 19 is recorded.
